# EUROPEAN PATENT SPECIFICATION

(11) **EP 1 721 096 B1**
(45) Date of publication and mention of the grant of the patent: **13.01.2010**
(21) Application number: 05707245.6
(22) Date of filing: 04.02.2005
(51) Int. Cl.: F16L 1/024, F16L 1/12, F16L 3/00

(54) **METHOD FOR TRIGGERING AND CONTROLLING THE LATERAL BUCKLING IN UNDERWATER PIPELINES**
VERFAHREN ZUM AUSLÖSEN UND STEUERN DES LATERALEN KNICKENS VON UNTERWASSERROHRLEITUNGEN
PROCEDE PERMETTANT DE DECLENCHER ET DE REGLER LE DEVERSEMENT DANS DES PIPELINES SOUS-MARINS

(30) Priority: 23.02.2004 IT MI20040300
(43) Date of publication of application: 15.11.2006
(73) Proprietor: Saipem Energy Services S.p.A, 20097 San Donato Milanese (MI) (IT)
(72) Inventor: MONTI, Paolo, I-20121 Milan (IT); CASOLA, Floriano, I-21045 Gazzada Schianno (IT); BRANDUARDI, Luca, I-20078 San Colombano Al Lambro (IT)
(74) Representative: De Gregori, Antonella
(86) International application number: PCT/EP2005/001222
(87) International publication number: WO 2005/080845

(56) References cited:
- SU-A- 555 253
- US-A- 2 405 819
- US-A- 4 147 455
- US-A- 4 265 566
- US-A- 4 929 124

## Description

The present invention relates to a method for triggering and controlling the lateral buckling in underwater pipelines.

The analysis of the lateral buckling and thermal expansion of a pipeline carrying hot or very hot fluids, can represent a primary restriction during the design stage, particularly when large diameter pipes and/or high temperatures and/or pressures are involved.

In practice, it is extremely difficult to reliably estimate the localization, shape and extent of the response, after the triggering of a lateral buckling of a pipeline subjected to compression.

Uncertainties as to the ground friction parameters, together with the "a priori" unknown level of defects associated with the pipe conditions on the seabed after its laying, are key factors which condition detailed design and require particular sensitivity analyses. These factors determine the acceptability of the pipe configurations in which the buckling is triggered.

The installation of specific supporting systems for pipelines has already been proposed as a solution during the design of a pipelin, see for example US-A-4147455 ; the design of supports can in fact be aimed at locally obtaining lower friction forces between the pipeline and support with respect to those acting between the pipeline and the seabed. These lower forces allow both the triggering position of the lateral buckling of the pipeline, which occurs in correspondence with the supporting system by means of lateral shifting on its surface, and also the amplitude of the deformation.

The form of lateral deformation cannot be known a priori as it depends on the imperfections existing when the pipeline is heated; the width of the supporting structure must therefore be established in the design phase to support the maximum extent of deformation in both lateral directions, with the support positioned in the centre of the laying corridor. Furthermore, the width of the support must envisage installation tolerances of the pipeline on the seabed.

These requisites can require a large dimensional structure (up to several tens of meters of extension transversal to the pipeline), thus jeopardizing the support, or inducing in turn interference problems (in particular in the case of the crossing of existing pipelines or in the presence of adjacent pipelines), and/or installation problems, whose entity can at times prejudice the feasibility of the solution.

In addition, the fatique damage caused by repeated interruption operations (shut-downs) or start-ups of the pipeline, not specifically controlled by the supporting systems normally used, could become unacceptable and/or become a restricting parameter in the design of the pipeline.

We have found that by using certain supporting systems which offer a supporting system tilting transversally to the direction of the pipeline and not horizontal, it is possible to eliminate or at least considerably reduce problems deriving from the uncertainty of the behaviour of lateral buckling.

In the method, object of the present invention, for the triggering and controlling of the lateral buckling of underwater pipelines by the installation of supporting systems positioned in certain points of the seabed, the upper surfaces of said supports, where the pipelines rest, are tilted with respect to the horizontal plane, transversally to the direction of said pipelines.

The method according to the invention comprises the following steps:
- installation of supporting systems in certain points of the seabed;
- laying of the underwater pipelines by resting them on the upper surfaces of said supporting systems.

The underwater pipelines are positioned on the upper surfaces, also with the use of funnels formed by structures present around the higher end of the main structure of the support: in this case, at least part of these structures can be removed after the pipelines have been rested on the upper surfaces of the supporting system.

The inclination of the upper surface can be constant or it can vary in one or more points of the surface itself.

The upper surface can be a tilted plane or a curved surface with the concavity facing upwards or it can be polygonal comprising alternating sections with varying inclinations and possibly horizontal stretches.

Furthermore, a final section can be envisaged, which is counter-inclined to limit the maximum amplitude due to thermal effects.

The inclination angle of the upper tilted surface with respect to the horizontal plane, preferably ranges from 3 to 30°, more preferably between 5 and 15°.

This tilting configuration creates a lateral force acting on the pipeline, in relation to the weight of the line and inclination angle of the surface, which predetermines the direction of the transversal movement of the pipeline on the surface of the support.

These characteristics allow the same advantages to be obtained as those of traditional supporting systems, such as:
- forming a reliable trigger point for the triggering of lateral buckling of the pipeline in a predefined location;
- imposing a definite friction factor between the pipeline and the support.

Furthermore, the lateral buckling acting on the pipeline (induced by the tilting configuration of the upper surface of the support), produces additional significant advantages:
- it allows the direction of the lateral movement of the pipeline due to buckling, to be controlled, thus overcoming any uncontrolled effect associated with defects in the pipeline configurations;
- it reduces the stress variation range in the deformed zone induced by the cyclic loads due to repeated shutdown and start-up operations.

From what is specified above, it is possible to obtain the following benefits with respect to supporting systems with an upper surface having a horizontal configuration:
- the size of the supporting system can be significantly reduced (in particular its extension transversal to the pipeline) thus reducing the weight and cost of the system itself;
- the manufacturing, transportation and installation of the supporting system are improved and simplified due to the smaller size;
- the configuration of the pipeline after the triggering of the bucking can be optimized and controlled in terms of position, direction and amplitude.

The support, is basically a structure, positioned on the seabed, on which a pipeline can be rested. Its main characteristics are:
- Structure with a simple or lattice framework, with suitable foundations, for example of the mud-muts or suction piles type; the use of beam or tubular elements made of metal (for example steel) or composite material is envisaged. The selection of the configuration of the support (single or multiple, i.e. a combination of various supports with a single base structure) must ensure the stability of the system, on the basis of the project parameters (height of the support, vertical and horizontal reactions of the pipe, ground conditions, etc.);
- Tilting configuration of the upper surface; the inclination can be constant or transversally variable, thus enabling the dimensions of the structure and effectiveness of the control action on the buckling, to be optimized;
- Use of suitable coating material with a certain friction coefficient, compatible with the coating of the pipe for controlling the extent of lateral buckling, or alternatively, the use of a system with supporting rollers;
- Optional presence of an appropriate funnel formed by structures present around the higher end of the carrying structure of the support, which allows:
   - the extent of the laying corridor to be covered, including the installation tolerances;
   - the pipeline to be laterally guided into the correct initial position above the guides during the lowering of the pipeline in the laying phase;
   - the size of the structure to be minimized.

The configuration of the funnel can comprise bumper systems or equivalent devices, which can sustain the reaction of the pipeline during installation without damaging the pipeline itself. The partial or total removal of the funnel is effected, once the pipeline has been laid, by operations with or without underwater divers, to allow the lateral movement of the pipeline during thermal expansion and the triggering of the lateral buckling.

The support can optionally be equipped with suitable devices (jacks, screw or rack elements, etc.) which allow the inclination of the upper surface to be varied both after the laying of the support and before that of the pipeline and also during the operating life.

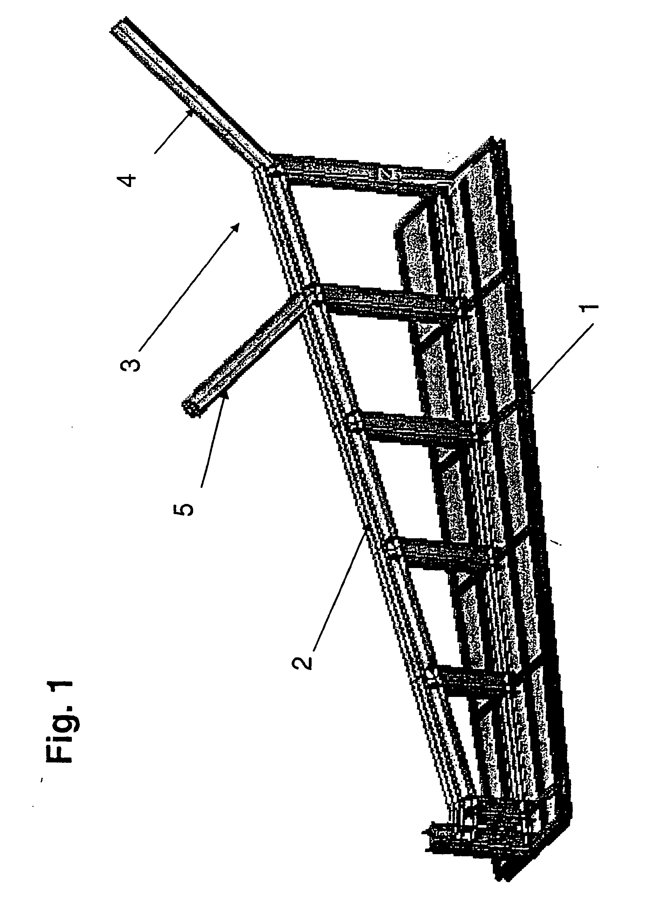

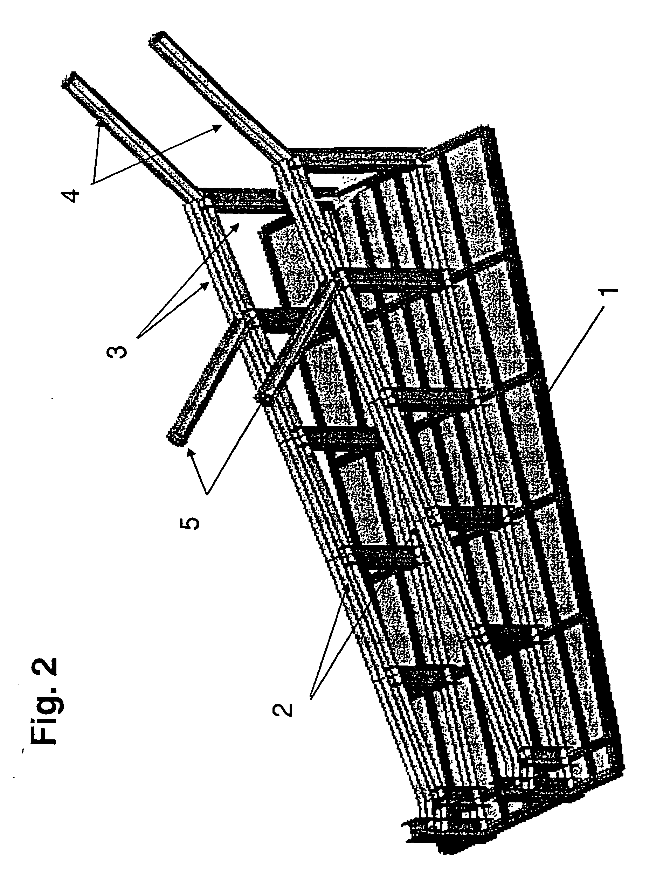

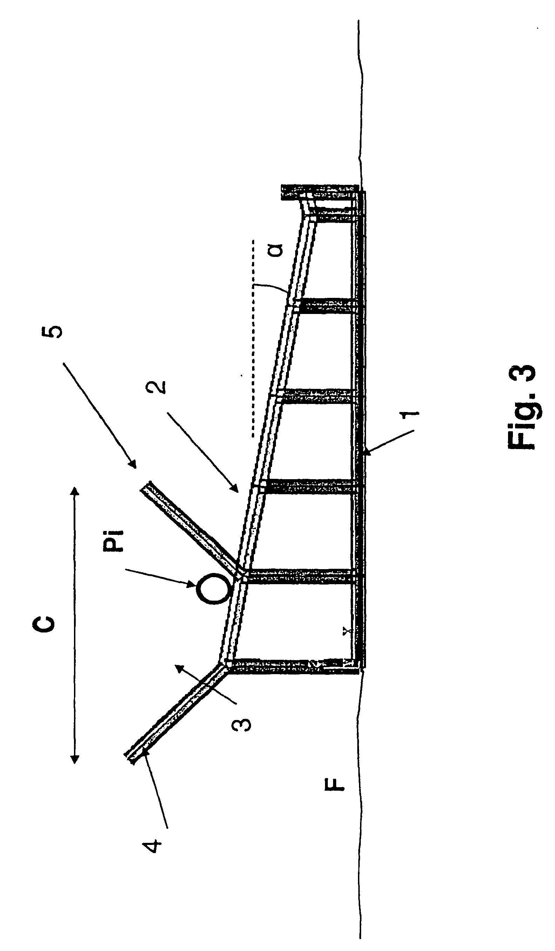

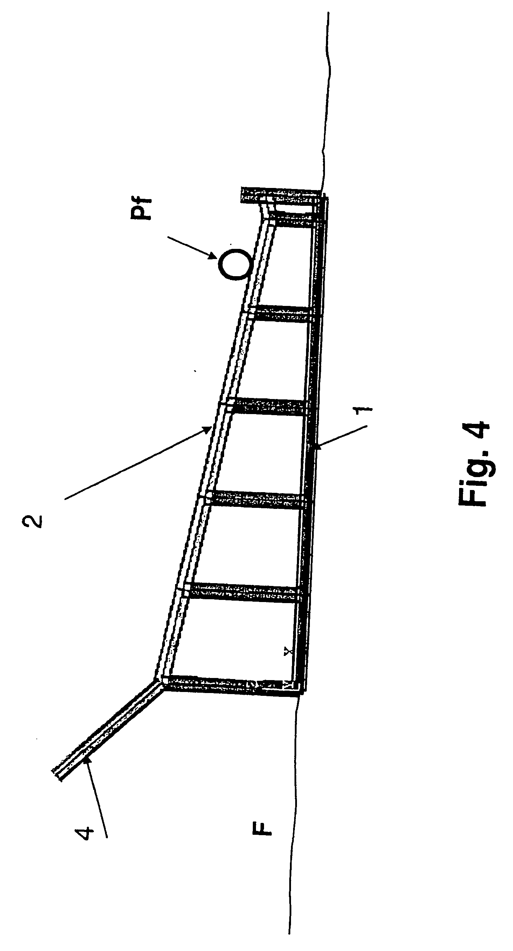

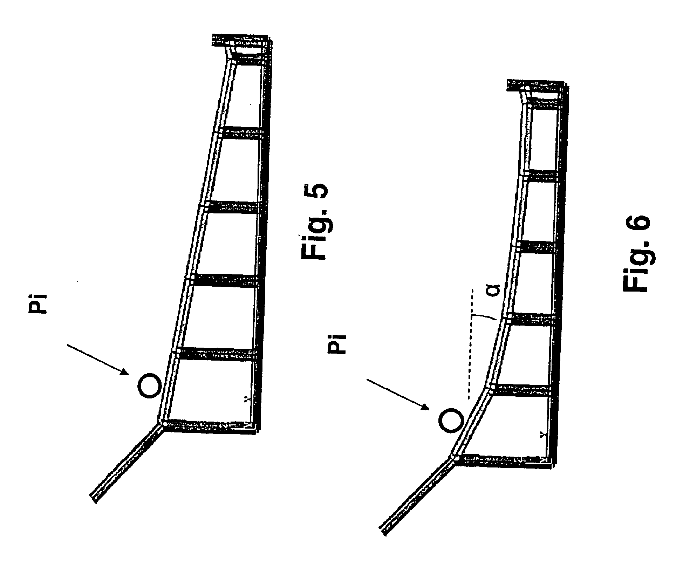

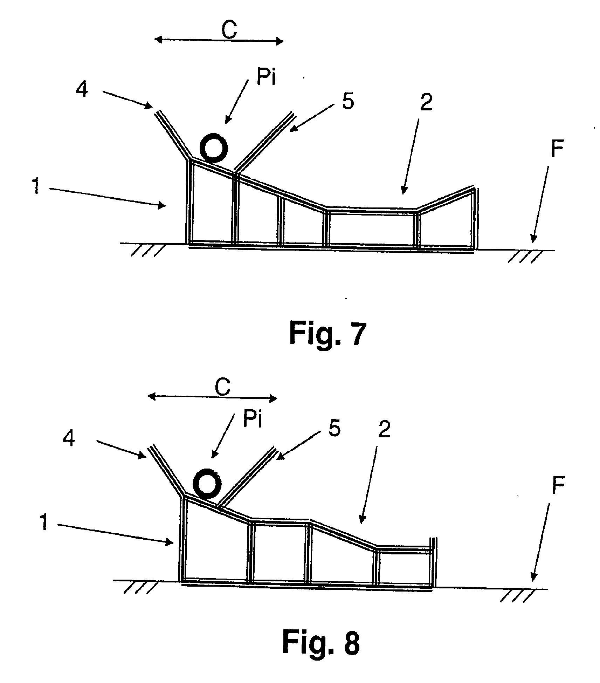

Some embodiments of the invention are provided with the help of figures 1-8.
Figure 1 represents a configuration of the support with a single framework.
Figure 2 represents a configuration of the support with a multiple framework.
Figures 3 and 4 represent a front view of the same previous configurations, after the laying of the pipeline and after the lateral buckling of the pipeline itself, respectively.
Figures 5 and 6 represent a front view of a configuration with a constant tilting surface and a variable tilting surface, respectively.
Figure 7 represents a front view of a configuration in which the final section of the upper surface of the support is counter-inclined.
Figure 8 represents a front view of a configuration in which the upper surface of the support consists of a succession of surfaces with varying inclinations alternating with horizontal stretches.

The following numbers indicate:
(1) the base structure;
(2) the tilted upper surfaces;
(3) the funnels;
(4) the fixed bumpers;
(5) the movable bumpers after the laying of the pipeline;
(Pi) the pipeline after laying;
(Pf) the pipeline after the triggering of the lateral buckling;
(F) the seabed;
(C) the laying corridor;
(α) the inclination angle of the upper surface with respect to the horizontal plane.

## Claims

1. A method for triggering and controlling the lateral buckling of underwater pipelines (Pi) by the installation of supporting systems positioned in certain points of the seabed (F) , **characterized in that** the upper surfaces (2) of said supports, on which the pipelines rest, are tilted with respect to the horizontal plane, transversally with respect to the direction of said pipelines, which creates a lateral force acting on the pipeline, in relation to the weight of the line and inclination angle of the surface, which predetermines the direction of the downward transversal movement of the pipeline on the surface (2) of the support.

2. The method according to claim 1, comprising the following steps:
• installation of the supporting systems in certain points of the seabed (F)
• laying of the underwater pipelines by resting them on the upper surfaces (2) of the support.

3. The method according to claim 2, wherein the underwater pipelines are rested on the upper surfaces of the support and also have funnels (3) formed by structures present around the higher end of the carrying structure of said support.

4. The method according to claim 3, wherein at least part of the structures present at the higher end of the carrying structure are removed after the pipelines have been rested on the upper surfaces (2).

5. The method according to at least one of the claims from 1 to 4, wherein the inclination angle (α) of the upper surface with respect to the horizontal plane ranges from 3 to 30°.

6. The method according to claim 5, wherein the inclination angle (α) ranges from 5 to 15°.

7. The method according to at least one of the claims from 1 to 6, wherein the upper surface (2) of the support has a constant inclination.

8. The method according to at least one of the claims from 1 to 6, wherein the upper surface (2) of the support has a varying inclination in one or more points.

9. The method according to at least one of the claims from 1 to 6, wherein the upper surface (2) of the support consists of a succession of sections with a varying inclination alternating with horizontal stretches.

10. The method according to at least one of the claims from 1 to 9, wherein the final section of the upper surface (2) of the support is counter-inclined.

11. The method according to claim 1, wherein said upper surfaces (2) are coated with material having a defined friction coefficient.

12. The method according to claim 1, wherein the friction between said upper surfaces (2) and the pipeline is defined by means of supporting rollers.

## Patentansprüche

1. Verfahren zum Auslösen und Steuern des seitlichen Verbiegens von Unterwasser-Leitungen (Pi) durch den Aufbau von Haltesystemen, welche an bestimmten Punkten des Meeresbodens (F) positioniert werden, **dadurch gekennzeichnet, dass** die oberen Oberflächen (2) der Halterungen, auf welchen die Leitungen ruhen, im Bezug zu der horizontalen Ebene quer im Bezug zu der Richtung der Leitungen gekippt sind, was in Relation zu dem Gewicht der Leitung und zu dem Neigungswinkel der Oberfläche eine seitliche Kraft erzeugt, welche auf die Leitung einwirkt, was die Richtung der nach unten gerichteten Querbewegung der Leitung auf der Oberfläche (2) der Halterung bestimmt.

2. Verfahren nach Anspruch 1, die folgenden Schritte umfassend:
• Aufbauen der Haltesysteme an bestimmten Punkten des Meeresbodens (F),
• Legen der Unterwasser-Leitungen, indem sie auf die oberen Oberflächen (2) der Halterung gelegt werden.

3. Verfahren nach Anspruch 2, **dadurch gekennzeichnet, dass** die Unterwasser-Leitungen auf die oberen Oberflächen der Halterung gelegt werden und wobei auch Trichter (3) vorhanden sind, welche durch Strukturen ausgebildet werden, die um das höhere Ende der Trägerstruktur der Halterung herum, vorhanden sind.

4. Verfahren nach Anspruch 3, **dadurch gekennzeichnet, dass** zumindest ein Teil der Strukturen, welche an dem höheren Ende der Trägerstruktur vorhanden sind, entfernt werden, nachdem die Leitungen auf die oberen Oberflächen (2) aufgelegt worden sind.

5. Verfahren nach einem der Ansprüche 1 bis 4, **dadurch gekennzeichnet, dass** der Neigungswinkel (α) der oberen Oberfläche bezüglich der horizontalen Ebene in einem Bereich von 3 bis 30° liegt.

6. Verfahren nach Anspruch 5, **dadurch gekennzeichnet, dass** der Neigungswinkel (α) in einem Bereich von 5 bis 15° liegt.

7. Verfahren nach einem der Ansprüche 1 bis 6, **dadurch gekennzeichnet, dass** die obere Oberfläche (2) der Halterung eine konstante Neigung aufweist.

8. Verfahren nach einem der Ansprüche 1 bis 6, **dadurch gekennzeichnet, dass** die obere Oberfläche (2) der Halterung an einem oder an mehreren Punkten eine andere Neigung aufweist.

9. Verfahren nach einem der Ansprüche 1 bis 6, **dadurch gekennzeichnet, dass** die obere Oberfläche (2) der Halterung aus aufeinanderfolgenden Abschnitten mit einer sich abhängig von horizontalen Streckungen verändernden Neigung besteht.

10. Verfahren nach einem der Ansprüche 1 bis 9, **dadurch gekennzeichnet, dass** der letzte Abschnitt der oberen Oberfläche (2) der Halterung entgegengesetzt geneigt ist.

11. Verfahren nach Anspruch 1, **dadurch gekennzeichnet, dass** die oberen Oberflächen (2) mit einem Material beschichtet sind, welches einen definierten Reibungskoeffizienten aufweist.

12. Verfahren nach Anspruch 1, **dadurch gekennzeichnet, dass** die Reibung zwischen den oberen Oberflächen (2) und der Leitung durch Auflagewalzen definiert ist.

## Revendications

1. Procédé de déclenchement et de contrôle du flambage latéral de pipelines immergés (Pi) par l'installation de systèmes de support positionnés en certains points du fond marin (F), **caractérisé en ce que** les surfaces supérieures (2) desdits supports, sur lesquelles reposent les pipelines, sont inclinées par rapport au plan horizontal, transversalement par rapport à la direction desdits pipelines, ce qui crée une force latérale agissant sur le pipeline, relativement au poids de la conduite et à l'angle d'inclinaison de la surface, qui prédétermine la direction du mouvement transversal vers le bas du pipeline sur la surface (2) du support.

2. Procédé selon la revendication 1, comprenant les étapes suivantes :
• installation des systèmes de support en certains points du fond marin (F) ;
• pose des pipelines immergés en les faisant reposer sur les surfaces supérieures (2) du support.

3. Procédé selon la revendication 2, dans lequel les pipelines immergés reposent sur les surfaces supérieures du support et ont aussi des entonnoirs (3) formés par les structures présentes autour de l'extrémité supérieure de la structure porteuse dudit support.

4. Procédé selon la revendication 3, dans lequel au moins une partie des structures présentes à l'extrémité supérieure de la structure porteuse est retirée après que les pipelines aient été posés sur les surfaces supérieures (2).

5. Procédé selon au moins l'une des revendications 1 à 4, dans lequel l'angle d'inclinaison (α) de la surface supérieure par rapport au plan horizontal est compris entre 3 et 30°.

6. Procédé selon la revendication 5, dans lequel l'angle d'inclinaison (α) est compris entre 5 et 15°.

7. Procédé selon au moins l'une des revendications 1 à 6, dans lequel la surface supérieure (2) du support a une inclinaison constante.

8. Procédé selon au moins l'une des revendications 1 à 6, dans lequel la surface supérieure (2) du support a une inclinaison qui varie en un ou plusieurs points.

9. Procédé selon au moins l'une des revendications 1 à 6, dans lequel la surface supérieure (2) du support consiste en une succession de sections d'inclinaison variée alternant avec des portions horizontales.

10. Procédé selon au moins l'une des revendications 1 à 9, dans lequel la section finale de la surface supérieure (2) du support a une inclinaison contraire.

11. Procédé selon la revendication 1, dans lequel lesdites surfaces supérieures (2) sont revêtues d'un matériau ayant un coefficient de frottement défini.

12. Procédé selon la revendication 1, dans lequel le frottement entre lesdites surfaces supérieures (2) et le pipeline est défini au moyen de rouleaux de support.
